# EUROPÄISCHE PATENTSCHRIFT

(11) **EP 3 204 689 B1**
(45) Veröffentlichungstag und Bekanntmachung des Hinweises auf die Patenterteilung: **09.03.2022**
(21) Anmeldenummer: 15781048.2
(22) Anmeldetag: 02.10.2015
(51) Int. Cl.: F21V 8/00, G02B 6/125

(54) **LICHTVERTEILER, EIN SYSTEM UMFASSEND EINEN LICHTVERTEILER UND ZUMINDEST EINE LED-LEUCHTE SOWIE EIN VERFAHREN ZUR HERSTELLUNG EINES LICHTVERTEILERS**
LIGHT DISTRIBUTOR, A SYSTEM COMPRISING A LIGHT DISTRIBUTOR AND AT LEAST ONE LED LUMINAIRE, AND A METHOD FOR PRODUCING A LIGHT DISTRIBUTOR
DISTRIBUTEUR DE LUMIÈRE, SYSTÈME CONSTITUÉ D'UN DISTRIBUTEUR DE LUMIÈRE ET D'UNE OU DE PLUSIEURS LAMPE À LED ET PROCÉDÉ DE FABRICATION D'UN DISTRIBUTEUR DE LUMIÈRE

(30) Priorität: 06.10.2014 DE 102014220141
(43) Veröffentlichungstag der Anmeldung: 16.08.2017
(73) Patentinhaber: Fraunhofer-Gesellschaft zur Förderung der angewandten Forschung e.V., 80686 München (DE)
(72) Erfinder: KONTERMANN, Stefan, 65719 Hofheim (DE); SCHADE, Wolfgang, 38644 Goslar (DE); WINTER, Christian, 38640 Goslar (DE)
(74) Vertreter: Friese Goeden Patentanwälte PartGmbB
(86) Internationale Anmeldenummer: PCT/EP2015/072780
(87) Internationale Veröffentlichungsnummer: WO 2016/055365

(56) Entgegenhaltungen:
- EP-A1- 2 211 215
- JP-A- S60 257 521
- US-A1- 2002 076 655
- US-A1- 2004 057 689
- US-A1- 2005 244 123
- US-A1- 2006 001 036
- KOO J-S ET AL: "UV written waveguide devices using crosslinkable PMMA-based copolymers", ELECTRONICS LETTERS, IEE STEVENAGE, GB, Bd. 39, Nr. 4, 20. Februar 2003 (2003-02-20), Seiten 394-395, XP006019898, ISSN: 0013-5194, DOI: 10.1049/EL:20030274

## Beschreibung

Die Erfindung betrifft einen Lichtverteiler, ein System umfassend einen Lichtverteiler und zumindest eine LED-Leuchte sowie ein Verfahren zur Herstellung eines Lichtverteilers. Ein Lichtverteiler ist ein optisches Bauteil, welches es ermöglicht, dass Licht von kleinteiligen Lichterzeugern wie z.B. LEDs, OLEDS oder Lasern, gleichmäßig über größere Flächen verteilt dargeboten werden kann. Insbesondere betrifft die Erfindung einen Lichtverteiler, ein System umfassend einen Lichtverteiler und eine LED-Leuchte sowie ein Herstellungsverfahren für einen Lichtverteiler, bei dem der Lichtverteiler mithilfe von Laserprozessieren erzeugte Strukturen aufweist.

Die Beleuchtungsindustrie hat mit der Entwicklung der weißen LED einen grundlegenden Wandel durchgemacht. Mit der LED-Beleuchtung sind immense Energieeinsparungen möglich und sie leistet einen wertvollen Beitrag zur Energiewende.

Die LED ermöglicht neben dem Energieeinsparungseffekten auch völlig neue Leuchtendesigns. Insbesondere die Möglichkeit, Licht mittels eines sogenannten LED-Streifens seitlich in eine transparente Platte einzuspeisen, schafft die Voraussetzung, Leuchten sehr flach zu gestalten. Gewünscht wird dabei auch eine möglichst hohe, vorzugsweise vollständige Transparenz der Leuchte, um ein "leichtes, schwebendes" Design zu realisieren.

Ein Problem bei dieser Art von Leuchten ist es, dass das von der LED über die Kante in die Platte eingespeiste und dann in der Platte geführte Licht um ca. 90° umgelenkt werden muss, so dass es senkrecht aus der Plattenfläche austritt, um Boden oder Decke des zu erhellenden Raumes zu beleuchten. Die Lösung gemäß des Standes der Technik sieht vor, eine Oberfläche der Platte bzw. die Lichtaustrittsfläche der Platte mit einer Oberflächenstrukturierung zu versehen. Dadurch lassen sich im Bereich der Substrat-Luft-Grenzfläche Reflexionen und Lichtbrechung erzeugen.

Gemäß einem Lösungsansatz werden durch mechanische Verfahren zum Beispiel pyramiden- oder kegelförmige Vertiefungen in der Oberfläche realisiert. Der Nachteil hierbei ist jedoch, dass derartig strukturierte Platten nicht mehr hinreichend transparent sind.

Aus der DE 10 2004 026 585 B4 ist ein Lichtverteiler mit einer lichtverteilenden Struktur bestehend aus Mikro- und Makrostrukturen bekannt. Hierbei handelt es sich wiederum um eine Oberflächenstrukturierung. Im beschriebenen Fall wird diese mithilfe einer Laserstrukturierung erzeugt. Darunter versteht man einen lokalen und präzisen oberflächlichen Werkstoffabtrag. Eingesetzt wird dieses Verfahren bei transparenten schmelzenden Kunststoffen wie z.B. PMMA (Polymethylmetacrylat, Handelsnamen: Plexiglas, Acrylglas). Bei diesem Verfahren wird der Kunststoff erwärmt, Material verdampft und depolymerisiert. Aufgrund der plötzlichen Hitzeeinwirkung lösen sich in angrenzenden Bereichen einzelne Partikel explosionsartig aus dem Material heraus, andernorts schmilzt das Material einfach nur auf und erstarrt wieder. Dieser Art der Oberflächenstrukturierung lässt sich zwar verhältnismäßig präzise steuern, jedoch verbleibt das Problem der nicht mehr perfekt transparenten Oberfläche.

Im Bereich der Grundlagenforschung und ohne konkreten Bezug zum Thema Lichtverteiler und Beleuchtungsdesign wird zurzeit auch die Bestrahlung von verschiedenen Substraten, insbesondere auch von Kunststoffen und Gläsern, genauer untersucht. Es ist bereits bekannt, dass sich bei spezifischer Bestrahlung mit Laserpulsen der Brechungsindex eines Substrates lokal verändern lässt. Hierzu werden Kurzzeitpuls-Laser, insbesondere Laser im Femtosekunden-Bereich, eingesetzt. Zur erfolgreichen lokalen Veränderung von Brechzahlen ist es notwendig, Pulsparameter einerseits und das behandelte Material andererseits aufeinander abzustimmen. Ein Beispiel für eine solche wissenschaftliche Untersuchung betreffend Brechzahlveränderungen in PMMA ist beispielswiese die Veröffentlichung Alexandra Baum et al.: "NUV and NIR Femtosecond Laser Modification of PMMA", Proceedings of LPM 2007 - The 8th International Symposium on Laser Precision Microfabrication*.*

Die DE 10 2009 025 072 A1 offenbart ein Verfahren zum Erzeugen eines Bereiches mit erhöhtem Brechungsindex. Das Verfahren umfasst das Bereitstellen eines Substrates aus Polycarbonat und das Erzeugen des Bereichs im Substrat durch eine Bestrahlung. Dieser Bereich mit erhöhtem Brechungsindex kann einen Lichtwellenleiter bilden. Neben Polycarbonat als Substrat wird auch die Verwendung von PMMA diskutiert. Dieses ist hinsichtlich einiger Aspekte als äquivalente Materialwahl anzusehen, jedoch wird in dieser Veröffentlichung darauf hingewiesen, dass PMMA viel stärker als Polycarbonat dazu neige, bei Laserbestrahlung Blasen zu bilden, so dass die Prozessführung zur Vermeidung solcher Blasen bei PMMA deutlich aufwendiger sei. Auch das Absorptionsverhalten von PMMA sei nachteilig.

Die DE 10 2013 100 888 A1 offenbart schließlich einen Lichtkonzentrator oder Lichtverteiler, der aus einer Mehrzahl von Lichtleitzellen aufgebaut ist, die in einem transparenten Lichtleitkörper aufgereiht sind. Die Lichtleitzellen werden durch Grenzflächen gebildet, die u. a. unter Zuhilfenahme von Laserstrahlung in dem Lichtleitkörper erzeugt werden können. Dabei kommt es ebenfalls zu einer lokalen Veränderung des Brechungsindex. Allerdings ist der aus dieser Druckschrift bekannte Lichtverteiler nur für eine senkrechte Einkopplung geeignet. Der Lichtleitkörper bzw. das Substratmaterial ist in der ganz überwiegenden Vielzahl der Fälle ein anorganisches Material bzw. ein Glas, und es erfolgt nur ein pauschaler Verweis auf Kunststoffe und deren grundsätzliche Tauglichkeit.

Die US 2005/244123 A1 offenbart ein Lichtverteiler mit eine Lichtstreustruktur und eine Lichtleitstruktur, wobei die Lichtstreustruktur mittels Ultrakurzpuls-Laserprozessieren hergestellt wird.

Die US 2002/076655 A1 offenbart die Herstellung eine Lichtleitstruktur mittels Ultrakurzpuls-Laserprozessieren.

Es ist deshalb die Aufgabe der vorliegenden Erfindung, einen verbesserten Lichtverteiler bereitzustellen, der insbesondere eine seitliche Einkopplung von Licht in den Lichtverteiler erlaubt. Der Lichtverteiler soll bruchfest sein und eine hohe Transparenz aufweisen. Außerdem soll er einfach herstellbar sein.

Die Aufgabe wird gelöst durch den Gegenstand der unabhängigen Patentansprüche 1 und 9.

Ein Kerngedanke der Erfindung ist es, erstmalig in einem Lichtverteiler lichtstreuende und lichtleitende Strukturen miteinander zu kombinieren. Dies ermöglicht die geforderte Lichtumlenkung um etwa 90° bzw. ermöglicht die effiziente seitliche Einkopplung von Licht. Des Weiteren werden die lichtstreuenden und lichtleitenden Strukturen durch die Verwendung von Ultrakurzpuls-Lasern erzeugt. Es erfolgt bei der Bestrahlung eine lokale Veränderung des Berechnungsindex, was die Lichtstreuung und Lichtleitung ermöglicht. Dabei werden diese Strukturen nicht auf der Oberfläche, sondern innerhalb des Lichtverteilers bzw. seines transparenten Grundkörpers gebildet. Sowohl die Art der Bildung der Strukturen als auch deren Positionierung (nicht auf der Oberfläche) trägt zu einer wesentlich verbesserten Transparenz des Lichtverteilers und damit zu einem wesentlich ästhetischeren Beleuchtungseffekt bei.

Gemäß einem ersten Aspekt der Erfindung bezieht sich diese auf einen Lichtverteiler, der einen transparenten Grundkörper mit einer Lichteintrittsfläche und einer Lichtaustrittsfläche aufweist. Er verfügt über mindestens eine Lichtstreustruktur mit veränderter Brechzahl innerhalb des Grundkörpers zum Streuen von Licht sowie mindestens eine Lichtleitstruktur mit veränderter Brechzahl innerhalb des Grundkörpers zum Leiten von Licht. Dabei sind die Lichtstreustruktur und die Lichtleitstruktur durch Ultrakurzpuls-Laserprozessieren erzeugt worden. Sie weisen also einen Bereich veränderter Brechzahl verglichen mit dem unbestrahlten Grundkörper auf. Die Lichtstreustruktur und die Lichtleitstruktur mir veränderter Brechzahl sind dabei so in dem Grundkörper angeordnet, dass durch die Lichteintrittsfläche einfallendes Licht zunächst an der Lichtstreustruktur gestreut und dann - im Wesentlichen dank der vorangehenden Streuung - mittels der Lichtleitstruktur mit veränderter Brechzahl zur Lichtaustrittsfläche geleitet werden kann.

Die mindestens eine Lichtstreustruktur und die mindestens eine Lichtleitstruktur wird dabei bevorzugt, aber nicht zwingend, mittels desselben Ultrakurzpuls-Lasers erzeugt, es können alternativ aber auch verschiedene oder mehrere gleiche Ultrakurzpuls-Laser zum Einsatz kommen.

Die Bestrahlung des transparenten Grundkörpers mit einem Ultrakurzpuls-Laser unterscheidet sich von den bisher anwendungstechnisch etablierten Laserbearbeitungsmethoden, insbesondere auch vom sogenannten herkömmlichen Laserstrukturieren. Unter dem Laserstrukturieren wird nämlich eine Oberflächenbearbeitungsmethode unter Materialabtrag verstanden. Dies ist beim Ultrakurzpuls-Laserprozessieren nicht so, ein Materialabtrag findet nicht statt. Auch erfolgt bei entsprechender Wahl der Prozessparameter keinerlei Aufschmelzen oder Depolymerisation des Materials bzw. des Grundkörpers. Der Grund hierfür ist der, dass die verwendeten ultrakurzen Laserpulse so kurz sind, dass keine Wärmeübertragung ins Material stattfindet. Somit wird auch kein Material aufgeschmolzen. Stattdessen ist es so, dass beim Ultrakurzpuls-Laserprozessieren aufgrund der Laserfeldstärke örtliche Materialverdichtungen oder auch eine örtliche Verringerung der Verdichtung erzielt werden kann, was wiederum zu einer Punktstelle mit örtlich variiertem Brechungsindex führt. Das Ultrakurzpuls-Laserprozessieren gemäß der vorliegenden Erfindung beruht also auf einer örtlichen Veränderung der Materialdichte und damit des Brechungsindex. Dabei bestehen die Lichtstreustruktur und die Lichtleitstruktur in dem transparenten Grundkörper aus demselben Material wie der Grundkörper selbst. Es erfolgt keine Hinzufügung von Fremdmaterialien, Einsätzen, Dotierungen oder Ähnlichem zur Veränderung der Brechzahl. Dies trägt zu einer sehr guten Transparenz des Grundkörpers bzw. Lichtverteilers und damit zu einem sehr ästhetischen Erscheinungsbild bei.

Die zur Erzeugung der Lichtstreustruktur und der Lichtleitstruktur eingesetzten Ultrakurzpuls-Laser können bei unterschiedlichen Frequenzen oder Pulsdauern arbeiten. Je nach Material des transparenten Grundkörpers können die Lichtstreustruktur bzw. die Lichtleitstruktur mithilfe verschiedener Lasertypen erzeugt werden. In einigen Ausführungsformen der Erfindung kann ein Titan-Saphir-Laser und/oder ein Faserlaser und/oder ein Ytterbium-dotierter Kalium-Yttrium-Wolframat-Laser (Yb:KYW) verwendet werden, welche Pulsdauern von etwa 2 fs bis etwa 1000 fs oder von etwa 10 fs bis etwa 100 fs erzeugen können. Die Wellenläge der laserstrahlung kann zwischen etwa 700 nm und etwa 1100 nm oder zwischen etwa 700 nm und etwa 1000 nm oder zwischen etwa 750 nm und etwa 850 nm gewählt sein. Durch die Bestrahlung mit Laserpulsen wird der Brechungsindex in den bestrahlten Teilbereichen um einen Wert Δn geändert welcher nach der Erfindung 10⁻³ bis 10⁻⁴ ist.

Gemäß einer Ausführungsform der Erfindung ist der transparente Grundkörper aus Kunststoff. Gemäß einer weiteren Ausführungsform enthält der Grundkörper PMMA. In einigen Ausführungsformen besteht der Grundkörper aus PMMA. PMMA ist die Abkürzung für Polymethylmetacrylat und ist auch unter den Handelsnamen Plexiglas und Acrylglas bekannt. Aber auch die Verwendung anderer Kunststoffe ist grundsätzlich möglich, solange der Kunststoff laserbearbeitbar ist. Ein weiteres Beispiel ist beispielsweise PS (Polystyrol) oder Kunststoffe auf Basis von Polybutadienen. Die Verwendung von Polycarbonat ist ebenfalls möglich. In anderen Ausführungsformen der Erfindung kann Polyactid verwendet werden, welches nachfolgend auch als PLA abgekürzt wird. In einigen Ausführungsformen der Erfindung kann ein biokompatibles Polymer Verwendung finden. Der Begriff Biokompatibilität soll für die Zwecke der Erfindung die funktionale Ähnlichkeit zu körpereigenen Strukturen und/oder eine angemessene biologische Verträglichkeit in einem menschlichen oder tierischen Körper umfassen. Der Vorteil vieler der vorgenannten Kunststoffe ist, dass sie die für einen Einsatz in einem Lichtverteiler notwendige hohe Bruchfestigkeit aufweisen.

Gemäß einer Ausführungsform der Erfindung ist der Grundkörper als quaderförmige Platte ausgebildet. Dadurch lassen sich Leuchten sehr flach gestalten. In einigen Ausführungsformen der Erfindung kann die Platte eine Größe von etwa 50 × 100 mm² bis etwa 300 × 1000 mm² aufweisen.

Gemäß der Erfindung sind die Lichtstreustruktur und die Lichtleitstruktur mit veränderter Brechzahl so in dem Grundkörper angeordnet, dass durch die Lichteintrittsfläche einfallendes Licht zunächst an der Lichtstreustruktur gestreut und dann mittels der Lichtleitstruktur mit veränderter Brechzahl zur Lichtaustrittsfläche geleitet werden kann. Diese Anordnung macht es möglich, sozusagen innerhalb des transparenten Grundkörpers eine Lichtumlenkung um einen gewünschten Betrag vorzunehmen. Es ist beispielsweise möglich, die Anordnung der Lichteintrittsfläche, der Lichtaustrittsfläche, der Lichtstreustruktur und der Lichtleitstruktur zueinander so zu wählen, dass mit dem Lichtverteiler eine Lichtumlenkung um 90° oder mehr erfolgen kann. Dabei ist es normalerweise so, dass das Licht senkrecht auf die Lichteintrittsfläche fällt und im Wesentlichen auch wieder senkrecht aus der Lichtaustrittsfläche (hier also einer unbearbeiteten bzw. nicht mikrostrukturierten Oberfläche) wieder heraustritt. Bei diesem senkrechten Lichtein- bzw. Lichtaustritt durch die Lichteintritts- und die Lichtaustrittsfläche ist der Winkel zwischen der Lichteintrittsfläche und der Lichtaustrittsfläche also identisch mit dem Winkel der Lichtumlenkung selbst. Bei anderem Lichteintritt oder Lichtaustritt muss dies aber selbstredend nicht der Fall sein. Eine Anordnung von Lichteintrittsfläche und Lichtaustrittsfläche in einem 90°-Winkel zueinander ermöglicht es insbesondere, den erfindungsgemäßen Lichtverteiler sehr effizient kantengespeist von einer LED-Leuchte einzusetzen.

Im Übrigen ist der erfindungsgemäße Lichtverteiler speziell für Anforderungen mit Lichtumlenkung konzipiert. Aus Gründen der Lichtumlenkung innerhalb des Grundkörpers werden nämlich erfindungsgemäß die Lichtstreustruktur und die Lichtleitstruktur miteinander kombiniert. Eine solche Kombination findet aber beispielsweise nicht in den Fällen statt, in denen eine Lichteintrittsfläche und eine Lichtaustrittsfläche eines Lichtverteilers parallel zueinander angeordnet sind. Hier entfällt die Notwendigkeit des Vorsehens einer Lichtstreustruktur zur Lichtumlenkung. Bei dem erfindungsgemäßen Lichtverteiler ist es deshalb in einer Ausführungsform so, dass die Lichteintrittsfläche und die Lichtaustrittsfläche zueinander nicht parallel sind. Bevorzugt bilden sie etwa einen rechten Winkel zueinander.

Gemäß einer Ausführungsform der Erfindung ist die Lichtstreustruktur als mindestens eine linear angeordnete Abfolge von Streuzentren innerhalb des Grundkörpers ausgebildet. Im Prinzip kann man sich diese Streustruktur wegen der Pulseigenschaft des Lasers also als eine Art gepunktete Linie vorstellen. Die Größe der Streuzentren sowie auch deren Abstand kann durch die Ultrakurzpuls-Laserprozessparameter eingestellt werden. In einigen Ausführungsformen der Erfindung kann die Größe der Streuzentren etwa 0,1 µm bis etwa 100 µm betragen. In anderen Ausführungsformen der Erfindung kann die Größe der Streuzentren etwa 1 um bis etwa 10 µm betragen.

Handelt es sich bei dem Lichtverteiler beispielsweise um eine quaderförmige Platte, so kann die angesprochene linear angeordnete Abfolge von Streuzentren zum Beispiel die gesamte Breite der Platte durchziehen. Es ist möglich, dass mehrere Lichtstreustrukturen in Form von linear angeordneten Abfolgen von Streuzentren innerhalb des Streukörpers vorgesehen sind. Es kann sich dabei um mehrere zueinander im Wesentlichen parallele Linienstrukturen handeln. Es ist aber natürlich auch möglich, dass die Lichtstreustruktur keine lineare Form, sondern eine gewundene Form etc. aufweist.

Gemäß einer Ausführungsform der Erfindung weist die Lichtleitstruktur mit veränderter Brechzahl eine Abmessung im Mikrometerbereich oder Submikrometerbereich auf. Die Lichtleitstruktur selbst kann dabei unterschiedlich ausgebildet sein. Es ist beispielsweise möglich, dass sie aus einem oder mehreren parallelen Kanälen im Wesentlichen linearer Art besteht oder diese aufweist. Die Struktur kann aber auch mehrere gebogene Kanäle oder alternativ eine trichterartige Struktur aufweisen. Eine trichterartige Struktur verjüngt sich bevorzugt in Richtung von den Lichtstreustrukturen weg. Sie sammelt gewissermaßen trichtermäßig gestreutes Licht. In jedem Fall basiert der Effekt der Lichtleitung auf den geschaffenen Brechzahländerungen in der Lichtleitstruktur. Bei verhältnismäßig großen Brechzahländerungen im Material des Grundkörpers ist es dabei möglich, Totalreflexionen des Lichtes in dem Grundkörper hervorzurufen und auf diese Weise das Licht zu leiten. Es ist aber auch denkbar, dass nur eine Lichtleitung bzw.ablenkung erfolgt. Die Lichtleiter weisen dabei einen Durchmesser von etwa 0,1 µm bis etwa 100 µm oder von etwa 1 µm bis etwa 10 µm oder von etwa 0,1 µm bis etwa 10 µm auf. Die Länge kann mehrere Millimeter oder mehrere Zentimeter betragen in einigen Ausführungsformen kann die Länge zwischen 100 µm und etwa 10 cm betragen.

Gemäß einer Ausführungsform der Erfindung beträgt ein Winkel zwischen der Geraden, die durch eine lineare Abfolge von Streuzentren definiert wird, und einer Geraden, die die Hauptleitrichtung der Lichtleitstruktur beschreibt, zwischen etwa 80° und etwa 100°, bevorzugt etwa 90°. Die Hauptleitrichtung der Lichtleitstruktur ist dabei diejenige Richtung, in die das Licht geleitet werden soll. In den meisten Fällen fällt die Hauptleitrichtung der Lichtleitstruktur mit der Hauptachse der Lichtleitstruktur zusammen. Auf diese Weise ist es sehr effizient möglich, eine entsprechende Lichtumlenkung um etwa 90° zu verwirklichen.

Gemäß einem weiteren Aspekt der Erfindung bezieht sich diese auf ein System mit einem Lichtverteiler wie oben beschrieben und mit mindestens einer LED-Leuchte, wobei der Lichtverteiler und die LED-Leuchte so zueinander angeordnet sind, dass der Lichtverteiler durch das Licht der LED-Leuchte kantengespeist wird. Insbesondere handelt es sich dabei um einen in Form einer flachen quaderförmigen Platte ausgebildeten Lichtverteiler, wie er typischerweise zu Beleuchtungszwecken eingesetzt wird. Dabei kann eine einzelne LED-Leuchte vorgesehen sein, es ist aber auch möglich, dass mehrere LED-Leuchten zum Beispiel in Form eines LED-Streifens vorgesehen sind. Es ist auch möglich, LED-Leuchten an verschiedenen Seiten des Lichtverteilers (bevorzugt an beiden Kanten) vorzusehen. Dies gilt wiederum auch für die Möglichkeit des Vorsehens von LED-Leuchtenstreifen. Anstelle einer LED basierend auf anorganischem Material kann auch eine organische Leuchtdiode (OLED) vorgesehen sein. Auch die Verwendung von anderen kleinteiligen Lichterzeugern ist möglich.

Der erfindungsgemäße Lichtverteiler kann eine Leuchte oder einen Teil einer Leuchte bilden, mit welcher ein Innenraum oder eine Außenfläche beleuchtet werden kann. In anderen Ausführungsformen der Erfindung kann der Lichtverteiler Teil einer Werbetafel sein bzw. eine Hintergrundbeleuchtung einer Werbetafel bilden. In wiederum einer anderen Ausführungsform kann der Lichtverteiler eine Hintergrundbeleuchtung eines LCD-Displays bilden. Auch wenn der Lichtverteiler bevorzugt mit LED-Lichtquellen eingesetzt wird, ist die Verwendung anderer Lichtquellen nicht ausgeschlossen.

Gemäß einem weiteren Aspekt der Erfindung bezieht sich diese auf ein Verfahren zur Herstellung eines Lichtverteilers, insbesondere auf ein Verfahren zur Herstellung eines Lichtverteilers wie oben beschrieben. Das erfindungsgemäße Verfahren weist dabei die folgenden Schritte auf:
Bereitstellen eines transparenten Grundkörpers;
Bestrahlen des Grundkörpers mit ultrakurzen Laserpulsen eines Ultrakurzpuls-Lasers und dabei Bilden einer Lichtstreustruktur mit veränderter Brechzahl innerhalb des Grundkörpers und Bilden einer Lichtleitstruktur mit veränderter Brechzahl innerhalb des Grundkörpers, wobei die Lichtstreustruktur und die Lichtleitstruktur so angeordnet werden, dass eingekoppeltes Licht zunächst an der Lichtstreustruktur gestreut und danach durch die Lichtleitstruktur geführt und / oder ausgekoppelt werden kann.

Über den Bestrahlungsvorgang gilt das bereits in Zusammenhang mit dem Lichtverteiler Ausgesagte. Insbesondere können als Ultrakurzpuls-Laser Femtosekunden-Laser verwendet werden, die im nahen UV- oder auch im nahen Infrarotbereich arbeiten.

Bevorzugt ist dabei der transparente Grundkörper aus Kunststoff, insbesondere ist der Grundköper PMMA-basiert gebildet. Im Übrigen gilt auch hier das hinsichtlich des Grundkörpers in Zusammenhang mit dem Lichtverteiler Ausgesagte.

Gemäß einer Ausführungsform der Erfindung wird mindestens einer der folgenden Betriebsparameter des Ultrakurzpuls-Lasers während der Erzeugung der Strukturen durch Bestrahlung variiert. Der zumindest eine Betriebsparameter kann ausgewählt sein aus: Pulsleistung, Pulsanzahl, Pulsdauer, Laserfrequenz und/oder Pulsform. Alternativ oder zusätzlich können auch andere Prozessparameter variiert werden. Hierzu zählen insbesondere solche Prozessparameter, die sich auf eine Relativbewegung zwischen dem zu bearbeitenden Grundkörper und der Ultrakurzpuls-Lasereinrichtung beziehen. Beispielsweise können Parameter eines Abtastverfahrens oder eines Vorschubs verändert werden, die wiederum einen Einfluss auf Ort und Dauer der Bestrahlung des Grundkörpers haben. Durch die Variierung eines oder mehrerer vorgenannter Betriebsparameter ist es zum Beispiel möglich, den Ort bzw. die Lage der Lichtstreustrukturen und Lichtleitstrukturen flexibel an die geforderten Gegebenheiten anzupassen. Alternativ oder zusätzlich ist es möglich, den Grad der Transparenz der Strukturen in dem transparenten Grundkörper durch die Prozessparameterwahl zu beeinflussen.

Die vorgenannten Ausführungsformen der Erfindung können ganz oder teilweise miteinander kombiniert werden.

Die Erfindung wird noch besser verstanden werden unter Bezugnahme auf die beigefügten Figuren. Dabei zeigt
Figur 1 ein Ultrakurzpuls-Laserprozessiertes Plexiglas mit lichtstreuenden Strukturen unterschiedlicher Transparenz.
Figur 2 illustriert die Streuwirkung einer lichtstreuenden Struktur.
Figur 3 zeigt verschiedene Anordnungen von lichtleitenden Strukturen relativ zu einer lichtstreuenden Struktur.
Figur 4 zeigt einen Querschnitt durch eine Plexiglasplatte mit lichtstreuenden und lichtleitenden Strukturen, wobei die Plexiglasplatte seitlich an der Kante mittels LED-Licht gespeist wird.

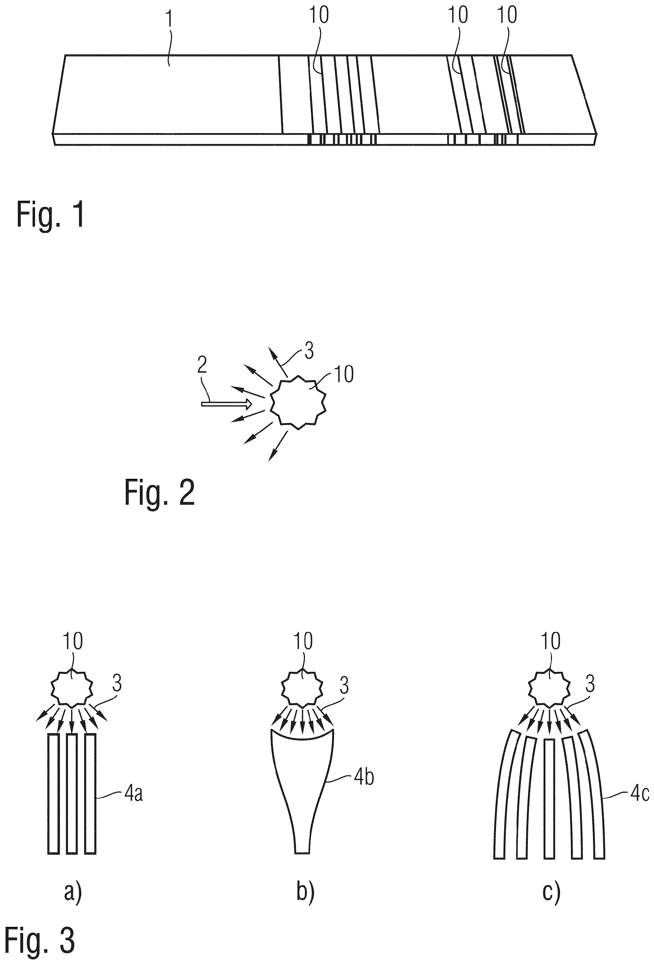

Figur 1 zeigt Ultrakurzpuls-Laserprozessiertes Plexiglas mit lichtstreuenden Strukturen unterschiedlicher Transparenz. Dargestellt ist ein transparenter Grundkörper 1 aus Plexiglas. Er ist in Form einer quaderförmigen Platte ausgebildet. Innerhalb der Platte sind mehrere linear angeordnete Lichtstreustrukturen 10 unterschiedlicher Transparenz zu erkennen. Im gezeigten Beispiel erstrecken sich diese entlang der gesamten Breite des Grundkörpers 1 und sind darüber hinaus parallel zueinander angeordnet. Bei den Lichtstreustrukturen 10 handelt es sich dabei also um eine linear angeordnete Abfolge von Streuzentren innerhalb des Grundkörpers 1. Die Lichtstreustrukturen 10 sind dabei nicht zwingend an der Oberfläche des Grundkörpers 1 ausgebildet, sondern können hinsichtlich der Dicke des Grundkörpers z. B. mittig in dem Grundkörper 1 verlaufen.

Figur 2 illustriert schematisch die Streuwirkung einer lichtstreuenden Struktur 10. Auf diese lichtstreuende Struktur 10 trifft ankommendes Licht 2 auf, das in Figur 2 durch einen dicken Pfeil illustriert ist. Das ankommende Licht 2 wird an der lichtstreuenden Struktur 10 gestreut wegen der dort veränderten Brechzahl. Das gestreute Licht 3 ist durch die dünnen Pfeile angedeutet.

Figur 3 illustriert exemplarisch mehrere Anordnungen von lichtleitenden Strukturen 4a bis 4c relativ zu einer lichtstreuenden Struktur 10. Helle und dunkle Bereiche der lichtleitenden Strukturen 4a bis 4c illustrieren Bereiche mit unterschiedlichem Brechungsindex. Das von der lichtstreuenden Struktur 10 gestreute Licht 3 fällt dabei jeweils auf die lichtleitende Struktur 4a, 4b, 4c bzw. in die lichtleitende Struktur 4a, 4b, 4c ein und wird in dieser insbesondere durch Totalreflexion geleitet. In Figur 3a ist die lichtleitende Struktur in Form mehrerer zueinander parallel angeordneter Kanäle ausgebildet, in denen das Licht 3 geleitet wird. In Figur 3b) ist die lichtleitende Struktur 4b in Form eines Trichters ausgebildet, in dem sich das Licht 3 geleitet bewegen kann. In Figur 3c ist die lichtleitende Struktur 4c in Form von mehreren nebeneinander verlaufenden leicht gekrümmten Kanälen ausgebildet. Die leichte Krümmung ermöglicht damit eine allmähliche Umlenkung der Leitungsrichtung in die finale Leitungsrichtung. In allen dargestellten Fällen 3a bis 3c ist die Hauptleitrichtung der Lichtleitstruktur senkrecht, das heißt sie liegt innerhalb der Papierebene und Licht 3 wird dort von oben nach unten geleitet.

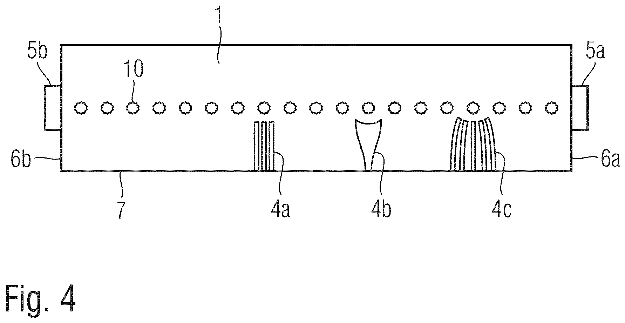

Figur 4 zeigt schematisch und im Querschnitt ein System mit einem Lichtverteiler und zwei LED-Leuchten. Dargestellt ist der typische Fall einer Kanteneinspeisung. Der Plexiglasquader ist im Querschnitt dargestellt und verfügt über einen transparenten Grundkörper 1. Seitlich ist jeweils eine LED-Leuchte 5a bzw. 5b vorgesehen. Die LED-Leuchten befinden sich also entsprechend an den Lichteintrittsflächen 6a und 6b. Auf der gedachten Verbindungslinie zwischen den LED-Leuchten 5a und 5b befinden sich mehrere Lichtstreustrukturen 10. Bei jeder dieser Lichtstreustrukturen 10 handelt es sich um eine im Wesentlichen linear angeordnete Abfolge von Streuzentren. Die Lichtstreustrukturen 10 sind dabei im Wesentlichen parallel zueinander vorgesehen. Sie befinden sich nicht an der Oberfläche, sondern mittig im transparenten Grundkörper 1 des Lichtverteilers. Im unteren Bereich des Grundkörpers 1 sind mehrere verschiedene Lichtleitstrukturen 4a, 4b und 4c dargestellt. Der Winkel zwischen der Geraden, die durch die lineare Abfolge der Streuzentren jeder Lichtstreustruktur 10 definiert wird, und der Hauptleitrichtung der Lichtleitstrukturen 4a, 4b und 4c beträgt im dargestellten Beispiel exakt 90°. Auch der Winkel zwischen der Verbindungslinie zwischen den LED-Leuchten 5a und 5b und der Hauptleitrichtung der Lichtleitstrukturen 4a, 4b und 4c beträgt jeweils 90°.

Durch die Lichteintrittsflächen 6a und 6b eintretendes Licht von den LED-Leuchten 5a und 5b wird an einer der Lichtstreustrukturen 10 jeweils gestreut. Das gestreute Licht gelangt nach dieser Streuung in eine der Lichtleitstrukturen 4a, 4b und 4c und tritt anschließend durch die Lichtaustrittsfläche 7 aus dem Grundkörper 1 des Lichtverteilers aus. Das dargestellte System aus Lichtverteiler und LED-Leuchten 5a, 5b garantiert bei sehr guter Transparenz ein sehr vorteilhaftes Beleuchtungsergebnis. Das bewährte Material PMMA kann dabei problemlos eingesetzt werden. Im dargestellten Ausführungsbeispiel wurde für die Laserprozessierung eine Wellenlänge von etwa 800 nm eingesetzt. Die Repetitionsrate der Laserpulse betrug etwa 5 kHz und die durchschnittliche Leistung 20 mW. Die Struktur 10 wurde mit einer Vorschubgeschwindigkeit von 0,5 mm/s erzeugt.

Dem Fachmann auf dem Gebiet der Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, der durch die beigefügten Patentansprüche festgelegt ist.

## Patentansprüche

1. Lichtverteiler, mit:
einen transparenten Grundkörper (1) mit einer Lichteintrittsfläche (6a, 6b) und einer Lichtaustrittsfläche (7);
mindestens eine Lichtstreustruktur (10) mit veränderter Brechzahl innerhalb des Grundkörpers (1) zum Streuen von Licht;
mindestens eine Lichtleitstruktur (4a, 4b, 4c) mit veränderter Brechzahl innerhalb des Grundkörpers (1) zum Leiten von Licht;
wobei die Lichtstreustruktur (10) und die Lichtleitstruktur (4a, 4b, 4c) durch Ultrakurzpuls-Laserprozessieren erzeugt wurden, wobei
durch Ultrakurzpuls-Laserprozessieren die veränderte Brechzahl um einen Wert Δn geändert ist, welcher zwischen 10⁻³ bis 10⁻⁴ beträgt und wobei
die Lichtstreustruktur (10) und die Lichtleitstruktur (4a, 4b, 4c) mit veränderter Brechzahl so in dem Grundkörper (1) angeordnet sind, dass durch die Lichteintrittsfläche (6a, 6b) einfallendes Licht zunächst an der Lichtstreustruktur (10) gestreut und dann mittels der Lichtleitstruktur (4a, 4b, 4c) mit veränderter Brechzahl zur Lichtaustrittsfläche (7) geleitet werden kann.

2. Lichtverteiler nach Anspruch 1, **dadurch gekennzeichnet, dass** der Grundkörper (1) PMMA oder PLA oder ein biokompatibles Polymer enthält oder daraus besteht.

3. Lichtverteiler nach einem der Ansprüche 1 oder 2, **dadurch gekennzeichnet, dass** die Lichtleitstruktur (4a, 4b, 4c) mit veränderter Brechzahl einen Durchmesser von etwa 0,1 µm bis etwa 10 µm und/oder eine Länge zwischen 100 µm und etwa 10 cm aufweist.

4. Lichtverteiler nach einem der Ansprüche 1 bis 3, **dadurch gekennzeichnet, dass** der Grundkörper (1) als quaderförmige Platte ausgebildet ist.

5. Lichtverteiler nach einem der Ansprüche 1 bis 4, **dadurch gekennzeichnet, dass** die Anordnung der Lichteintrittsfläche (6a, 6b), der Lichtaustrittsfläche (7), der Lichtstreustruktur (10) und der Lichtleitstruktur (4a, 4b, 4c) zueinander so gewählt ist, dass mit dem Lichtverteiler eine Lichtumlenkung um 90° oder mehr erfolgen kann.

6. Lichtverteiler nach einem der Ansprüche 1 bis 5, **dadurch gekennzeichnet, dass** die Lichtstreustruktur (10) als mindestens eine linear angeordnete Abfolge von Streuzentren innerhalb des Grundkörpers (1) ausgebildet ist.

7. Lichtverteiler nach Anspruch 6, **dadurch gekennzeichnet, dass** ein Winkel zwischen der Geraden, die durch die lineare Abfolge der Streuzentren definiert wird, und einer Geraden, die die Hauptleitrichtung der Lichtleitstruktur (4a, 4b, 4c) beschreibt, zwischen etwa 80° und etwa 100°, insbesondere etwa 90°, beträgt.

8. System, das folgendes aufweist:
einen Lichtverteiler nach einem der Ansprüche 1 bis 7;
mindestens eine LED-Leuchte (5a, 5b);
wobei der Lichtverteiler und die LED-Leuchte (5a, 5b) so zueinander angeordnet sind, dass der Lichtverteiler durch das Licht der LED-Leuchte (5a, 5b) kantengespeist wird.

9. Verfahren zur Herstellung eines Lichtverteilers, insbesondere eines Lichtverteilers nach einem der Ansprüche 1 bis 7, das die folgenden Verfahrensschritte aufweist:
Bereitstellen eines transparenten Grundkörpers (1);
Bestrahlen des Grundkörpers (1) mit ultrakurzen Laserpulsen eines Ultrakurzpulslasers und dabei
- Bilden einer Lichtstreustruktur (10) mit veränderter Brechzahl innerhalb des Grundkörpers (1), und
- Bilden eines Lichtleitstruktur (4a, 4b, 4c) mit veränderter Brechzahl innerhalb des Grundkörpers (1), wobei durch Ultrakurzpuls-Laserprozessieren die veränderte Brechzahl um einen Wert Δn geändert wird, welcher zwischen 10⁻³ bis 10⁻⁴ beträgt und wobei die Lichtstreustruktur (10) und die Lichtleitstruktur (4a, 4b, 4c) so angeordnet werden, dass eingekoppeltes Licht zunächst an der Lichtstreustruktur (10) gestreut und danach durch die Lichtleitstruktur (4a, 4b, 4c) geführt und/oder ausgekoppelt werden kann.

10. Verfahren nach Anspruch 9, **dadurch gekennzeichnet, dass** der Grundkörper (1) PMMA oder PLA oder ein biokompatibles Polymer enthält oder daraus besteht.

11. Verfahren nach einem der Ansprüche 9 oder 10, **dadurch gekennzeichnet, dass** mindestens einer der folgenden Betriebsparameter des Ultrakurzpulslasers während der Erzeugung der Strukturen durch Bestrahlung variiert wird: Pulsleistung, Pulsanzahl, Pulsdauer, Laserfrequenz.

## Claims

1. Light distributor, comprising:
a transparent main body (1) having a light entrance area (6a, 6b) and a light exit area (7);
at least one light-scattering structure (10) with a changed refractive index in the main body (1) for scattering light;
at least one light-guiding structure (4a, 4b, 4c) with a changed refractive index in the main body (1) for guiding light;
wherein the light-scattering structure (10) and the light-guiding structure (4a, 4b, 4c) were produced by ultrashort pulse laser processing, the changed refractive index having been changed by a value Δn, which is between 10⁻³ to 10⁻⁴, by means of ultrashort pulse laser processing, and wherein the light-scattering structure (10) and the light-guiding structure (4a, 4b, 4c) with a changed refractive index are arranged in the main body (1) in such a way that light incident through the light entrance area (6a, 6b) is initially scattered by the light-scattering structure (10) and can then be guided by means of the light-guiding structure (4a, 4b, 4c) with a changed refractive index to the light exit area (7).

2. Light distributor according to claim 1, **characterized in that** the main body (1) contains, or consists of, PMMA or PLA or a biocompatible polymer.

3. Light distributor according to any of claims 1 or 2, **characterized in that** the light-guiding structure (4a, 4b, 4c) with a changed refractive index has a diameter of about 0.1 µm to about 10 µm and/or a length between 100 µm and about 10 cm.

4. Light distributor according to any of claims 1 to 3, **characterized in that** the main body (1) is made as a cuboid-shaped plate.

5. Light distributor according to any of claims 1 to 4, **characterized in that** the arrangement of the light entrance area (6a, 6b), the light exit area (7), the light-scattering structure (10) and the light-guiding structure (4a, 4b, 4c) are selected in relation to one another in such a way that there can be a light deflection by 90° or more with the light distributor.

6. Light distributor according to any of claims 1 to 5, **characterized in that** the light-scattering structure (10) is made as at least one linearly arranged sequence of scattering centers in the main body (1).

7. Light distributor according to claim 6, **characterized in that** an angle between the straight line which is defined by the linear sequence of the scattering centers and a straight line which describes the main guiding direction of the light-guiding structure (4a, 4b, 4c) is between about 80° and about 100°, in particular approximately 90°.

8. System comprising as follows:
a light distributor according to any of claims 1 to 7;
at least one LED luminaire (5a, 5b);
wherein the light distributor and the LED luminaire (5a, 5b) are arranged to one another in such a way that the light distributor is edge-fed by the light of the LED luminaire (5a, 5b).

9. Method for producing a light distributor, in particular a light distributor according to any of claims 1 to 7, which comprises the following method steps:
providing a transparent main body (1);
irradiating the main body (1) with ultrashort laser pulses of an ultrashort pulse laser and in this connection
- forming a light-scattering structure (10) with a changed refractive index in the main body (1), and
- forming a light-guiding structure (4a, 4b, 4c) with a changed refractive index in the main body (1),
wherein the changed refractive index is changed by a value Δn,
which is between 10⁻³ to 10⁻⁴, by ultrashort pulse laser processing, and wherein the light-scattering structure (10) and the light-guiding structure (4a, 4b, 4c) are arranged in such a way that coupled-in light is initially scattered by the light-scattering structure (10) and can then be guided through the light-guiding structure (4a, 4b, 4c) and/or coupled out.

10. Method according to claim 9, **characterized in that** the main body (1) contains, or consists of, PMMA or PLA or a biocompatible polymer.

11. Method according to any of claims 9 or 10, **characterized in that** at least one of the following operating parameters of the ultrashort pulse laser is varied during the production of the structures by irradiation: pulse power, pulse number, pulse duration, laser frequency.

## Revendications

1. Distributeur de lumière, comprenant :
un corps de base transparent (1) muni d'une surface d'entrée de lumière (6a, 6b) et d'une surface de sortie de lumière (7) ;
au moins une structure de diffusion de lumière (10) à indice de réfraction modifié à l'intérieur du corps de base (1) pour diffuser la lumière ;
au moins une structure de guidage de lumière (4a, 4b, 4c) à indice de réfraction modifié à l'intérieur du corps de base (1) pour guider la lumière ;
dans lequel
la structure de diffusion de lumière (10) et la structure de guidage de lumière (4a, 4b, 4c) ont été produites par traitement par laser à impulsions ultracourtes,
par le traitement par laser à impulsions ultracourtes, l'indice de réfraction modifié est modifié d'une valeur Δn qui se situe entre 10⁻³ et 10⁻⁴, et
la structure de diffusion de lumière (10) et la structure de guidage de lumière (4a, 4b, 4c) à indice de réfraction modifié sont disposées dans le corps de base (1) de telle sorte que la lumière incidente à travers la surface d'entrée de lumière (6a, 6b) peut d'abord être diffusée sur la structure de diffusion de lumière (10) et ensuite être guidée vers la surface de sortie de lumière (7) au moyen de la structure de guidage de lumière (4a, 4b, 4c) à indice de réfraction modifié.

2. Distributeur de lumière selon la revendication 1, **caractérisé en ce que** le corps de base (1) contient ou est constitué de PMMA ou de PLA ou d'un polymère biocompatible.

3. Distributeur de lumière selon l'une des revendications 1 ou 2, **caractérisé en ce que** la structure de guidage de lumière (4a, 4b, 4c) à indice de réfraction modifié présente un diamètre d'environ 0,1 µm à environ 10 µm et/ou une longueur comprise entre 100 µm et environ 10 cm.

4. Distributeur de lumière selon l'une des revendications 1 à 3, **caractérisé en ce que** le corps de base (1) est réalisé sous forme de plaque parallélépipédique.

5. Distributeur de lumière selon l'une des revendications 1 à 4, **caractérisé en ce que** l'agencement de la surface d'entrée de lumière (6a, 6b), de la surface de sortie de lumière (7), de la structure de diffusion de lumière (10) et de la structure de guidage de lumière (4a, 4b, 4c) les unes par rapport aux autres est choisi de telle sorte que le distributeur de lumière permet de dévier la lumière de 90° ou plus.

6. Distributeur de lumière selon l'une des revendications 1 à 5, **caractérisé en ce que** la structure de diffusion de lumière (10) est réalisée sous la forme d'au moins une succession linéaire de centres de diffusion à l'intérieur du corps de base (1).

7. Distributeur de lumière selon la revendication 6, **caractérisé en ce qu'**un angle entre la ligne droite définie par la succession linéaire de centres de diffusion et une ligne droite décrivant la direction de guidage principale de la structure de guidage de lumière (4a, 4b, 4c) est compris entre environ 80° et environ 100° et est en particulier d'environ 90°.

8. Système comprenant ce qui suit :
un distributeur de lumière selon l'une des revendications 1 à 7 ;
au moins une lampe à DEL (5a, 5b) ;
le distributeur de lumière et la lampe à DEL (5a, 5b) étant disposés l'un par rapport à l'autre de telle sorte que le distributeur de lumière est alimenté par le bord avec la lumière de la lampe à DEL (5a, 5b).

9. Procédé de fabrication d'un distributeur de lumière, en particulier d'un distributeur de lumière selon l'une des revendications 1 à 7, comprenant les étapes suivantes consistant à :
fournir un corps de base transparent (1) ;
irradier le corps de base (1) avec des impulsions laser ultracourtes d'un laser à impulsions ultracourtes et ainsi
- former une structure de diffusion de lumière (10) à indice de réfraction modifié à l'intérieur du corps de base (1), et
- former une structure de guidage de lumière (4a, 4b, 4c) à indice de réfraction modifié à l'intérieur du corps de base (1),
dans lequel
par le traitement par laser à impulsions ultracourtes, l'indice de réfraction modifié est modifié d'une valeur Δn qui se situe entre 10⁻³ et 10⁻⁴, et
la structure de diffusion de lumière (10) et la structure de guidage de lumière (4a, 4b, 4c) sont disposées de telle sorte que la lumière injectée peut d'abord être diffusée sur la structure de diffusion de lumière (10) et ensuite être guidée par la structure de guidage de lumière (4a, 4b, 4c) et/ou être extraite.

10. Procédé selon la revendication 9, **caractérisé en ce que** le corps de base (1) contient ou est constitué de PMMA ou de PLA ou d'un polymère biocompatible.

11. Procédé selon l'une des revendications 9 ou 10, **caractérisé en ce que** l'un au moins des paramètres de fonctionnement suivants du laser à impulsions ultracourtes est varié pendant la génération des structures par irradiation : puissance d'impulsion, nombre d'impulsions, durée d'impulsion, fréquence laser.
